# EUROPÄISCHE PATENTSCHRIFT

(11) **EP 0 734 975 B1**
(45) Veröffentlichungstag und Bekanntmachung des Hinweises auf die Patenterteilung: **03.06.1998**
(21) Anmeldenummer: 96104318.9
(22) Anmeldetag: 19.03.1996
(51) Int. Cl.: B65G 1/10

(54) **Regallager mit Ziehregalen**
Shelf storage with movable racks
Magasin à rayonnage déplaçable

(30) Priorität: 28.03.1995 DE 29505214 U
(43) Veröffentlichungstag der Anmeldung: 02.10.1996
(60) Teilanmeldung: 97117211.9
(73) Patentinhaber: GEBR. WILLACH GmbH, D-53809 Ruppichteroth (DE)
(72) Erfinder: Willach, Hansfriedrich, 53809 Ruppichteroth (DE); Meier, Horst, 51766 Engelskirchen (DE); Schmitt, Werner, 53809 Ruppichteroth-Schönenberg (DE)
(74) Vertreter: Selting, Günther, Dipl.-Ing.

(56) Entgegenhaltungen:
- WO-A-91/07338
- FR-A- 2 238 650
- US-A- 4 252 488
- US-A- 4 726 725

## Beschreibung

Die Erfindung betrifft ein Regallager mit mehreren Ziehregalen, die auf mindestens einer Seite eines Ganges angeordnet sind und jeweils einzeln in den Gang hineingezogen werden können, um aus den Regalfächern des betreffenden Ziehregals Waren zu entnehmen bzw. die Regalfächer mit Waren zu befüllen.

In einem Ziehregal-Lager sind die Waren in den Regalfächern einzelner Ziehregale untergebracht. Die Ziehregale sind quer zur Richtung eines Ganges angeordnet und jedes Ziehregal kann einzeln in den Gang hineingezogen werden, um Zugriff zu den Regalfächern dieses Ziehregals zu erhalten. Üblicherweise werden Ziehregal-Lager, wie sie in Apotheken anzutreffen sind, manuell bedient. Ziehregal-Lager haben den Vorteil einer großen Lagerdichte und eines geringen Raumbedarfs.

Ein Regallager, von dem der Oberbegriff des Patentanspruchs 1 ausgeht, ist bekannt aus WO-A-91/07338. Das bekannte Regallager weist hängende Ziehregale auf, die einzeln gesteuert in einen Gang hineingefahren werden können. Längs des Ganges ist eine Transportvorrichtung verfahrbar, die einen aufragenden Mast aufweist, welcher einen Manipulatorarm trägt. Der Manipulatorarm kann derart gesteuert werden, daß er auf ein ausgewähltes Regalfach zugreift, wenn das Ziehregal sich in dem Gang in einer genau definierten Stellung befindet, die durch Anschlagelemente vorgegeben ist. Das Ziehregal, auf das zugegriffen werden soll, wird also vollständig in den Gang hineinbewegt und anschließend wird der Manipulatorarm in einer parallel zur Ebene des Ziehregales verlaufenden Ebene auf das betreffende Regalfach eingestellt, auf das er anschließend zugreift. Hierbei wird die Zugriffszeit dadurch verlängert, daß das Ziehregal jeweils vollständig in den Regalgang hineingezogen werden muß.

Der Erfindung liegt die Aufgabe zugrunde, ein Regallager mit Ziehregalen zu schaffen, das eine automatische Warenentnahme mit sehr kurzer Zugriffszeit ermöglicht.

Die Lösung dieser Aufgabe erfolgt erfindungsgemäß mit den Merkmalen des Patentanspruchs 1.

Bei dem erfindungsgemäßen Regallager ist eine Transportvorrichtung vorgesehen, die entlang des Ganges verfahrbar ist, in den die einzelnen Ziehregale hineinbewegt werden können. Die Transportvorrichtung weist einen hast auf, der einen in der Höhe verfahrbaren Vertikalschlitten trägt. Der Vertikalschlitten trägt seinerseits einen Manipulatorarm für den Zugriff auf das jeweils anzusteuernde Regalfach. Ein wesentlicher Vorteil besteht darin, daß die Ziehregale und die Transportvorrichtung unabhängig voneinander gesteuert sind, derart, daß das Herausbewegen eines Ziehregals in den Gang und das Fahren der Transportvorrichtung entlang des Ganges gleichzeitig erfolgen können. Wenn ein Befehl für einen Zugriff auf ein bestimmtes Regalfach eines bestimmten Ziehregals vorliegt, können Transportvorrichtung und Ziehregal gleichzeitig in Bewegung gesetzt werden, wobei der Manipulatorarm das anzusteuernde Regalfach des Ziehregales erreicht, wenn das Ziehregal bereits aus der Reihe der anderen Ziehregale herausgezogen ist. Der Manipulatorarm kann dann die betreffende Ware, die sich in dem Regalfach befindet, ergreifen und aus dem Regalfach herausziehen. Bereits während des Herausziehens der Ware bewegt sich die Transportvorrichtung in Richtung auf den Abgabeplatz, den sie somit nach kurzer Zeit erreicht, um die Ware dort abzugeben, beispielsweise an die Empfangsstation einer Rohrpostanlage. Ein weiterer Vorteil besteht darin, daß zum Entnehmen einer Ware aus einem Regalfach kein eigener Antrieb für den Manipulatorarm erforderlich ist. Vielmehr kann das Entnehmen der Ware dadurch erfolgen, daß die gesamte Transportvorrichtung in Richtung auf den Abgabeplatz gefahren wird.

Gemäß der Erfindung ist vorgesehen, daß die Ziehregale in Abhängigkeit von der Position des Regalfachs, auf das zugegriffen werden soll, unterschiedlich weit in den Gang hineingezogen werden, derart, daß das betreffende Regalfach in einer festen vertikalen Zielebene positioniert wird. Dies bedeutet, daß der Manipulatorarm so angeordnet ist, daß er für den Zugriff auf ein Ziehregal stets in derselben vertikalen Zielebene bewegt wird. Generell braucht der Manipulatorarm also keinen Horizontalantrieb, sondern er muß nur gesteuert in der Höhe bewegt werden. Ein Horizontalantrieb für den Manipulatorarm kann allerdings aus anderen Gründen zweckmäßig sein, die später erläutert werden. Dadurch, daß das jeweilige Ziehregal nur so weit in den Gang herausgezogen wird, wie dies für den Zugriff auf das betreffende Regalfach erforderlich ist, werden unnötige Verschiebebewegungen des Regals und des Manipulatorarms in horizontaler Richtung vermieden. Das Maß der Bewegungen wird auf das unbedingt Erforderliche reduziert.

Grundsätzlich kann jedem Ziehregal für seinen Antrieb ein eigener Motor zugeordnet sein. Dabei ist jedoch ein erheblicher Aufwand erforderlich. Vorteilhafter ist es, wenn mehreren Ziehregalen eine gemeinsame Antriebsvorrichtung zugeordnet ist, wobei dasjenige Ziehregal, das bewegt werden soll, an die Antriebsvorrichtung angekuppelt wird. Die Antriebsvorrichtung ist vorzugsweise ein Treibriemen, z.B. Zahnriemen, an den die Ziehregale mit gesteuerten Kupplungsmitteln zur Mitnahme angeklinkt werden können.

Wenn der Manipulatorarm in entgegengesetzte Richtungen des Ganges schwenkbar ist, kann er eine Zugriffsrichtung und eine Abgaberichtung einnehmen. Wenn der Manipulatorarm in die Zugriffsrichtung zeigt, ist er auf die Öffnungen der Regalfächer zu gerichtet. Die entgegengesetzte Richtung ist die Abgaberichtung, d.h. die Richtung, in der der Manipulatorarm die entnommenen Gegenstände abgibt, damit diese z.B. in ein Rohrpostsystem eingegeben werden. Dadurch, daß die Zugriffsrichtung und die Abgaberichtung einander entgegengesetzt sind, ergeben sich für einen Entnahmevorgang kurze Fahrwege für die Transportvorrichtung, so daß die Zeit von der Entnahme bis zur Abgabe der Gegenstände verkürzt wird. Ein besonderer Vorteil liegt darin, daß die Transportvorrichtung mit dem entnommenen Gegenstand in Abgaberichtung wegfahren kann, während sich das Ziehregal noch in dem Gang befindet.

Das erfindungsgemäße Regallager eignet sich insbesondere für die automatische Lagerhaltung in Apotheken, wobei der Apotheker, der im Geschäftslokal die Kunden bedient, in einen Computer die Bestellnummern der betreffenden Produkte eingibt. Die Produkte werden dann vollautomatisch im Lager aus dem jeweiligen Regalfach entnommen und in ein Rohrpostsystem oder ein anderes Fördersystem eingeführt, das die Produkte in den Verkaufsraum transportiert. Bei einem derartigen Verkaufssystem ist es wichtig, kurze Zugriffszeiten zu haben, damit der Verkaufsvorgang in kurzer Zeit abgewickelt werden kann. Die Erfindung ist allerdings nicht auf diese spezielle Anwendung beschränkt. Sie ist vielmehr bei allen Regallagern anwendbar, die Ziehregale aufweisen oder auch eine Kombination aus Ziehregalen mit Standregalen.

Im folgenden wird unter Bezugnahme auf die Zeichnungen ein Ausführungsbeispiel der Erfindung näher erläutert.

Es zeigen:
- Fig. 1: eine Stirnansicht des Regallagers mit Blickrichtung in Längsrichtung des Ganges,
- Fig. 2: einen horizontalen Schnitt entlang der Linie II-II von Fig. 1,
- Fig. 3: einen vertikalen Schnitt entlang der Linie III-III von Fig. 1,
- Fig. 4: eine ähnliche Darstellung wie Fig. 3 zur Verdeutlichung der Abgabe der aus dem Regallager entnommenen Gegenstände und

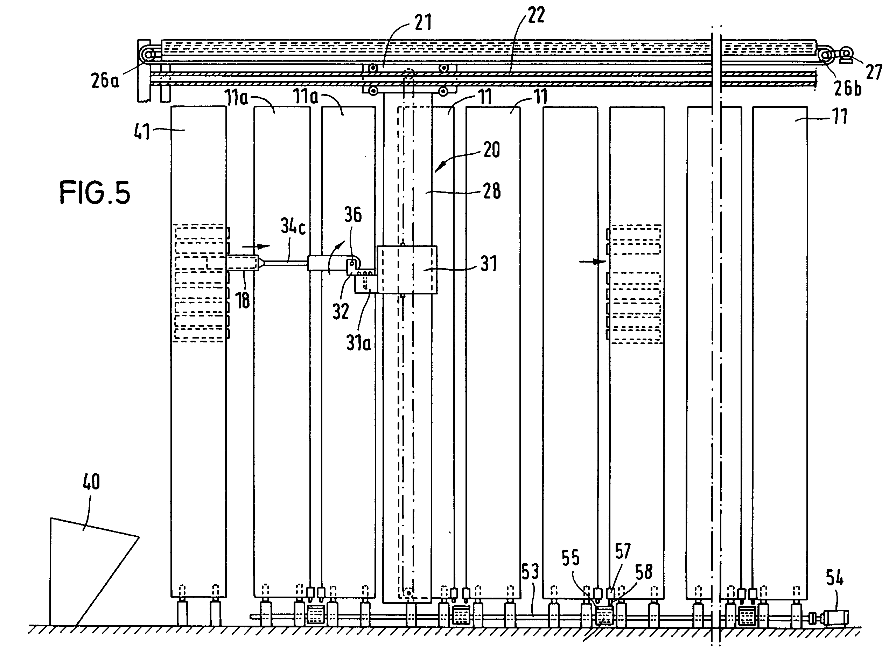

- Fig. 5: eine ähnliche Darstellung wie Fig. 3 zur Verdeutlichung des Nachfüllens von Gegenständen in das Regallager mit einem Warenübernahme-Ziehregal.

Das Regallager weist ein Traggestell 10 auf, in dem sämtliche Komponenten angeordnet sind. In dem Traggestell 10 befinden sich Ziehregale 11. Jedes dieser Ziehregale besteht aus einer scheibenförmigen Einheit mit einem hochkant stehenden Regalrahmen 12, der mit Rollen 13 auf einer Unterlage 14 läuft und somit innerhalb der Ebene des Ziehregals verschiebbar ist. Beidseitig eines Ganges 15 sind Ziehregale 11 angeordnet, wobei jedes der Ziehregale in den Gang 15 hineinbewegt werden kann. Der Gang 15 hat etwa die Breite eines Ziehregals 11.

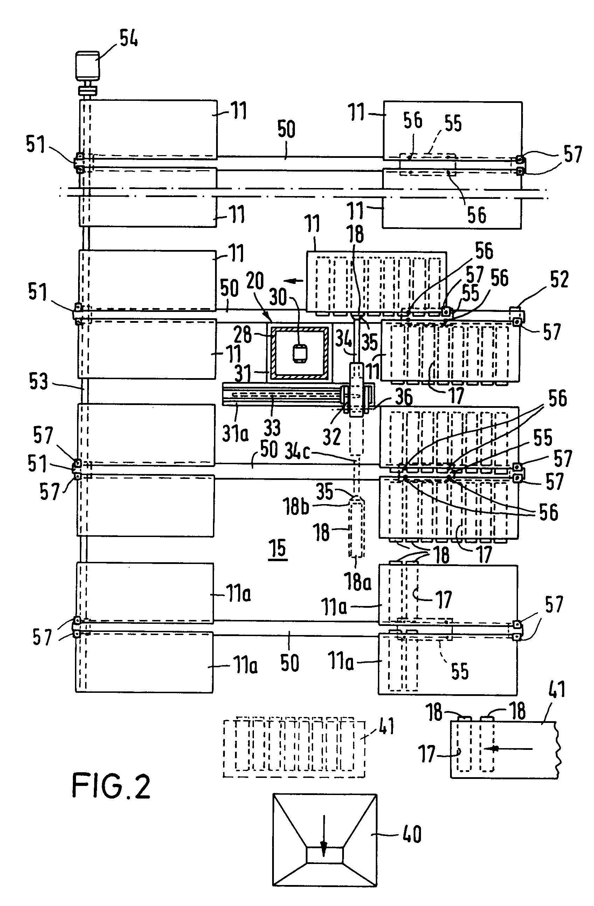

Die Ziehregale 11 enthalten Einsätze 16a,16b,16c, die beispielsweise aus Hartschaumstoff bestehen und in denen die Regalfächer 17 als horizontale zylindrische Bohrungen ausgebildet sind. Jede dieser Bohrungen ist zur Aufnahme einer Hülse 18 (Fig. 2) geeignet. Die Regalfächer 17 haben in den Einsätzen 16a,16b,16c unterschiedlich große Durchmesser, wodurch sie für unterschiedliche Hülsengrößen geeignet sind. Die Hülsen 18 bilden Aufnahmebehälter für die zu lagernden Produkte. Sie werden zusammen mit den Produkten als Gegenstände bezeichnet, die das Regallager aufnimmt. Die unterschiedlichen Hülsengrößen dienen dazu, Produkte unterschiedlicher Größen aufnehmen zu können.

Die Regalfächer 17 sind als Sacklöcher ausgebildet, d.h. sie sind an einem Ende offen und am anderen Ende geschlossen. Das offene Ende bildet die Zugangsöffnung des Regalfachs 17. Die Hülsen 18 sind ebenfalls an einem Ende 18a offen und am entgegengesetzten Ende 18b geschlossen. An dem geschlossenen Ende 18b befindet sich außen eine Kodierung, die die individuelle Bezeichnung dieser speziellen Hülse 18 angibt und im ganzen System nur einmal enthalten ist. Jede Hülse 18 hat also eine eigene Nummer bzw. einen eigenen Namen. Die Hülsen 18 werden in die Regalfächer 17 so eingesteckt, daß das geschlossene Ende 18b sichtbar ist, so daß die auf diesem Ende 18b enthaltene Kodierung gelesen werden kann, wenn die Hülse 18 in das Regalfach 17 eingesteckt ist.

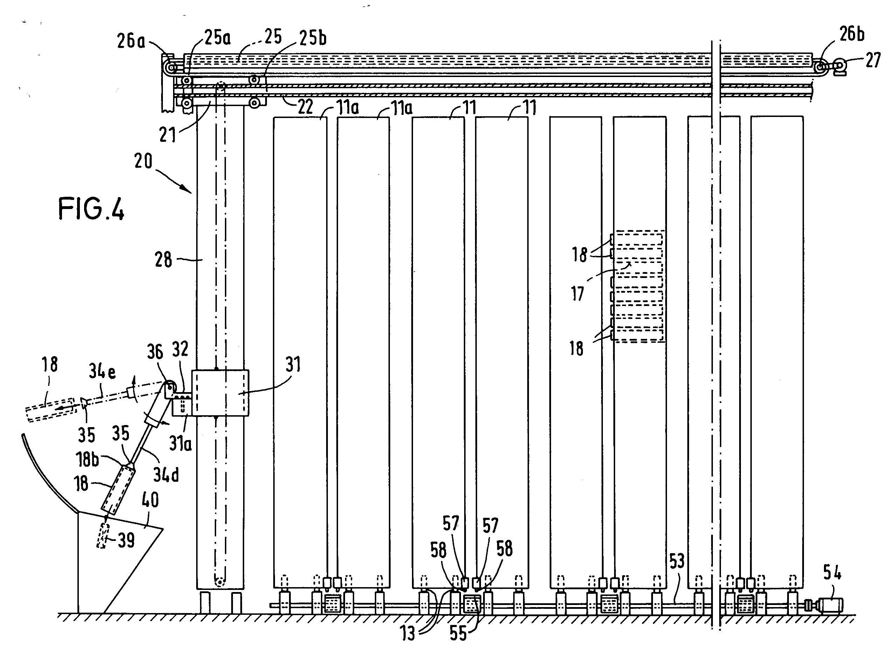

In Längsrichtung des Ganges 15 ist die Transportvorrichtung 20 verfahrbar. Diese weist einen Transportschlitten 21 auf, der an Schienen 22 des Rahmens 10 geführt und oberhalb der Ziehregale 11 angeordnet ist. Über dem Transportschlitten 21 verläuft eine am Rahmen 10 befestigte Führungsschiene 23, an deren entgegengesetzten Außenseiten Führungsrollen 24 des Transportschlittens 21 angreifen, um eine Seitenführung des Transportschlittens zu bewirken. Die Führungsschiene 23 besteht aus einem kastenförmigen Hohlprofil, in dem der Obertrum eines als Zahnriemen ausgebildeten Treibriemens 25 verläuft, dessen Enden 25a,25b gemäß Fig. 4 an dem Transportschlitten 21 befestigt sind. Der Treibriemen 25 läuft über Umlenkscheiben 26a,26b, die an den stirnseitigen Enden des Regallagers angeordnet sind, wobei die Umlenkscheibe 26b von einem Motor 27 angetrieben ist. Der Motor 27 ist ein Schrittmotor oder ein geregelter Motor, der den Transportschlitten numerisch gesteuert an beliebigen Positionen in X-Richtung, also in Richtung des Ganges 15, positionieren kann. Die Y-Richtung ist die Höhenrichtung und die Z-Richtung die Zustellrichtung, in der die Ziehregale verschoben werden.

Die Transportvorrichtung 20 weist ferner einen von dem Transportschlitten 21 nach unten ragenden Mast 28 auf, dessen unteres Ende frei, d.h. ungeführt, ist und der starr an dem Transportschlitten 21 befestigt ist, so daß er unabhängig von einwirkenden Belastungen stets seine senkrechte Position beibehält. In dem Mast 28 verläuft ein von einem Motor 29 angetriebener Zahnriementrieb 30 für den Antrieb eines Vertikalschlittens 31, der am Mast 28 geführt und in vertikaler Richtung gesteuert verfahrbar ist. Der Vertikalschlitten 31 weist eine horizontale Führungsbahn 31a auf, die nach beiden Seiten über den Mast 28 übersteht und einen Horizontalschlitten 32 trägt, welcher auf der Führungsbahn 31a in Z-Richtung verfahrbar ist. Die Führungsbahn 31a befindet sich auf der Abgabeseite des Mastes 28, also auf derjenigen Seite, zu der die Produkte gemäß Fig. 4 abgegeben werden.

Der Horizontalschlitten 32 wird über einen in der Führungsbahn 31a enthaltenen Riementrieb 33 angetrieben, so daß er von der rechten auf die linke Seite des Mastes 28 bewegt werden kann. Auf dem Horizontalschlitten 32 befindet sich der Manipulatorarm 34, der in X-Richtung weist und an seinem vorderen Ende einen Kopf 35 aufweist, welcher einerseits dazu dient, die Kodierung an der Bodenfläche 18b zu lesen, und andererseits dazu, eine Hülse an ihrer Bodenfläche 18b festzusaugen. Die (nicht dargestellte) Saugvorrichtung des Manipulatorarms 34 ist ebenfalls von der zentralen Steuerung des Regallagers in Abhängigkeit von der Position des Manipulatorarms 34 gesteuert.

Wie Fig. 2 zeigt, kann der Manipulatorarm 34 um eine horizontale Achse 36 herum um mindestens 180° geschwenkt werden. Die Achse 36 befindet sich, bezogen auf den Mast 28, in Abgaberichtung, so daß der Manipulatorarm 34, wenn er gemäß Fig. 2 in die Zugriffsrichtung weisen soll, neben dem Mast 28 vorbeigehen muß.

Die Steuerung ist so vorgesehen, daß der Horizontalschlitten 32 mit dem in Zugriffsrichtung weisenden Manipulatorarm 34 zwei fest vorgegebene Stellungen einnehmen kann, nämlich rechts und links vom Mast 28. In jeder dieser Stellungen befindet sich der Manipulatorarm 34 in der vertikalen Zielebene 37. Auf diese Zielebene 37 wird das jeweilige Regalfach 17, auf das zugegriffen werden soll, gebracht, indem das Ziehregal 11 entsprechend weit in den Gang 15 hineinbewegt wird.

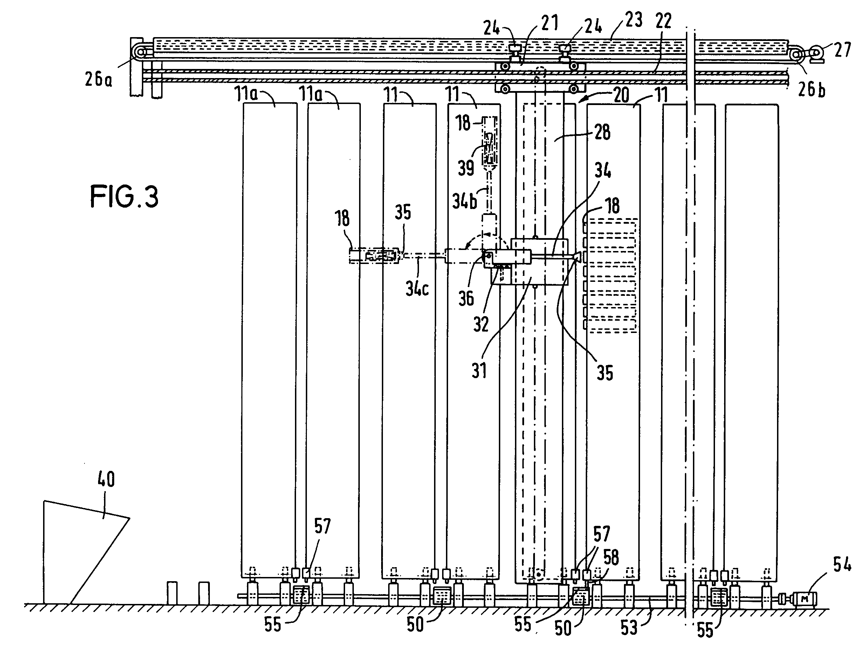

Fig. 3 zeigt den Manipulatorarm 34 beim Zufahren auf eine der Hülsen 18 im Ziehregal 11. Nach dem Ansaugen der Hülse 18 durch den Kopf 35 wird der Mast 28 in Abgaberichtung verfahren, wodurch die Hülse 18 aus ihrem Fach 17 herausgezogen wird. Dann wird der Manipulatorarm 34 um die Achse 36 hochgeschwenkt, so daß er die Position 34b einnimmt, wobei sichergestellt ist, daß das in der Hülse 18 enthaltene Produkt 39 nicht herausfallen kann. Der Manipulatorarm 34 kann dann in die Stellung 34c geschwenkt werden, in der er in Abgaberichtung weist, und ferner gemaß Fig. 4 in die Position 34d, in der das Produkt 39 aus der Hülse 18 herausfällt, um in die Aufnahmevorrichtung 40 eines Rohrpostsystems zu gelangen. Die Position 34d entspricht einem Winkel von mehr als 200° in bezug auf die Zugriffsrichtung. Schließlich kann der Manipulatorarm 34 in die Stellung 34e (Fig. 4) hochgeschwenkt werden, in der die Hülse 18 von dem Kopf 35 freigegeben oder abgestoßen wird.

Wie aus Fig. 2 hervorgeht, sind die Regalfächer 17 der Ziehregale 11 generell zur Abgaberichtung hin offen, d.h. zu der Aufnahmevorrichtung 40. Dies hat den Zweck, daß der in die Zugriffsrichtung weisende Manipulatorarm 34 die in dem Regalfach 17 steckende Hülse erreichen kann. Damit der Abstand zwischen den in Abgaberichtung liegenden Ziehregalen 11a zu der Aufnahmevorrichtung 40 nicht zu groß wird, sind in diesen letzten Ziehregalen 11a die Regalfächer 17 zur entgegengesetzten Seite hin offen wie die Regalfächer der anderen Ziehregale 11. Der Zugriff auf das Regalfach 17 eines der Ziehregale 11a erfolgt in der Stellung 34c des Manipulatorarms (Fig. 2), wobei die Transportvorrichtung 20 zum Zwecke der Entnahme der Hülse 18 erst zurück- und dann vorfahren muß. Dies hat zur Folge, daß die Zugriffszeit für die Ziehregale 11a größer ist als für die übrigen Ziehregale 11. In den Ziehregalen 11a wird man daher Waren speichern, die weniger häufig benötigt werden bzw. bevorzugt die Hülsen 18 mit dem größten Durchmesser.

Am abgabeseitigen Ende des Ganges 15 befindet sich ein Warenübernahme-Ziehregal 41, das dazu dient, Waren vollautomatisch in das Regallager einzuführen. Das Warenübernahme-Ziehregal 41 kann ebenfalls quer in den Gang 15 hineinbewegt werden, wobei die in seinen Regalfächern 17 enthaltenen Hülsen 18 von dem Kopf 35 des Manipulatorarms 34 gelesen und ergriffen werden. Der Manipulatorarm 34 kann, wenn er auf die Abgabeseite des Mastes 28 geschwenkt ist, von dem Riementrieb 33 auf jede beliebige Stellung entlang der horizontalen Führungsbahn 31a eingestellt werden. Wenn das Warenübernahme-Ziehregal 41 sich in einer definierten Position im Gang 15 befindet, kann somit der Manipulatorarm 34 gesteuert jedes der Regalfächer 17 des mittig im Gang 15 stehenden Warenübernahme-Ziehregals anfahren. Die darin enthaltene Hülse 18 wird dann vom Manipulatorarm übernommen und dieser wird um die Achse 36 herum in die Zugriffsrichtung geschwenkt, um die Hülse mit dem darin enthaltenen Produkt in eines der Ziehregale 11 zu überführen, das zuvor in den Gang 15 herausgefahren wurde. Zum Anfahren der Fächer des Warenübernahme-Ziehregals 41 ist der Horizontalschlitten 32 entlang des gesamten Weges der horizontalen Führung 31a gesteuert verschiebbar. Dagegen kann der Manipulatorarm 34, wenn er in Zugriffsrichtung weist, stets nur zwei Positionen längs der Führung 31a einnehmen, nämlich in der jeweiligen vertikalen Zielebene für die rechte oder linke Reihe von Ziehregalen. Das Warenübernahme-Ziehregal 41 kann, im Unterschied zu den anderen Ziehregalen, aus dem Gestell 10 des Regallagers seitlich herausgefahren werden, damit es dort manuell mit neuen Hülsen 18 bestückt werden kann. Die Bestückung kann erfolgen, ohne daß die Warenausgabe aus den Ziehregalen 11,11a und der Warentransport zu der Aufnahmevorrichtung 40 gestört wird.

Die manuelle Bestückung des Warenübernahme-Ziehregals 41 kann willkürlich erfolgen, wobei die Bedienungsperson eine Hülse lediglich in irgendein zum Hülsendurchmesser passendes Fach einschiebt. Der Kopf 35 des Manipulatorarms 34 tastet in einem Suchlauf alle Fächer des Warenübernahme-Ziehregals 41 ab und erkennt dabei, welches Fach eine Hülse enthält, sowie auch die Kodierung dieser Hülse. Die Kodierung der Hülse wird bei der nachfolgenden Übergabe der Hülse an ein Fach eines der Ziehregale 11,11a zusammen mit der Nummer des Faches gespeichert. Dadurch wird sichergestellt, daß Fehler infolge menschlichen Versagens ausgeschlossen sind.

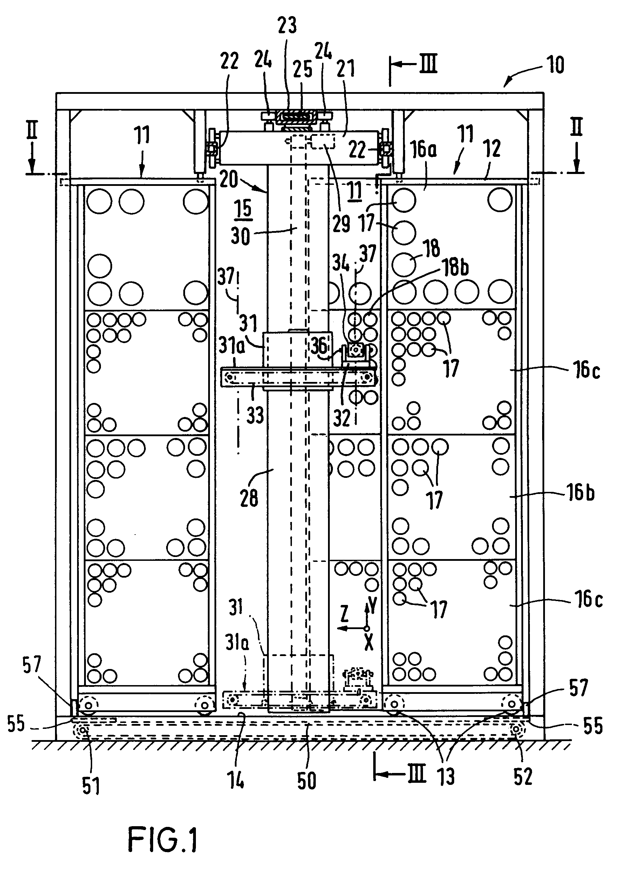

Im folgenden wird nun der Antrieb der einzelnen Ziehregale 11 bzw. 11a beschrieben. Für jeweils vier Ziehregale ist eine Antriebsvorrichtung in Form eines Zahnriementriebes 50 vorgesehen, wobei auf jeder Seite des Ganges 15 zwei dieser Ziehregale einander benachbart angeordnet sind. Vier Ziehregale bilden somit eine Gruppe. Der Riementrieb 50 weist einen Zahnriemen auf, der über Zahnscheiben 51,52 geführt ist, wobei die Zahnscheiben 51, die an dem einen Ende des Riementriebes angeordnet sind, angetrieben sind. Der Antrieb sämtlicher Zahnscheiben 51 erfolgt durch eine gemeinsame Welle 53 über einen Schrittmotor 54. Dies bedeutet, daß die Riementriebe 50 gemeinsam und synchron zueinander angetrieben werden. Jeder Riementrieb 50 weist einen Zahnriemen auf, der eine geschlossene Schleife bildet. Auf dem Obertrum dieses Zahnriemens ist gemäß Fign. 1 und 2 eine starre Platte 55 befestigt, die vier vertikale Mitnahmelöcher 56 aufweist. Jedes dieser Mitnahmelöcher 56 ist für eines der vier Ziehregale bestimmt. Die Ziehregale 11,11a haben jeweils über dem Riementrieb 50 eine Kupplungseinrichtung 57, die elektrisch betätigt werden kann, um einen vertikalen Mitnahmestift 58 nach unten auszufahren. Der Mitnahmestift 58 dringt in das entsprechende Mitnahmeloch 56 ein, wodurch das betreffende Ziehregal mit dem Riementrieb 50 gekuppelt wird. Die Steuerung erfolgt so, daß zu einem Zeitpunkt nur stets eine Kupplungseinrichtung 57 betätigt ist, so daß nur ein einziges Ziehregal mit einem der Riementriebe 50 gekuppelt ist.

In der Ruhestellung befinden sich die Platten 55 entweder in der rechten oder in der linken Endstellung, wobei zwei Mitnahmelöcher 56 sich vertikal unter den Mitnahmestiften 58 der Kupplungseinrichtungen 57 befinden. Wenn eine der Kupplungseinrichtungen 57 betätigt worden ist, werden anschließend alle Riementriebe 50 angetrieben und nur dasjenige Ziehregal wird mitgenommen, dessen Kupplungseinrichtung betätigt ist. Die übrigen Ziehregale bleiben in ihrer Position innerhalb der jeweiligen Reihe von Ziehregalen stehen. Der Motor 54 ist so gesteuert, daß das anzuwählende Regalfach 17 des betreffenden Ziehregals in der vertikalen Zielebene 37 positioniert wird. Dies bedeutet, daß die Riementriebe 50 dann stehenbleiben, wenn das anzuwählende Regalfach sich in der Zielebene 37 befindet. Nachdem die Hülse 18 aus dem Regalfach entnommen wurde, werden die Riementriebe 50 in Gegenrichtung angetrieben, um das betreffende Ziehregal wieder in seine Grundstellung innerhalb der betreffenden Reihe von Ziehregalen zurückzuführen. Wenn die Grundstellung erreicht ist, wird die Kupplungseinrichtung 57 gelöst.

Das Warenübernahme-Ziehregal 41 hat eine eigene Antriebsvorrichtung, die dieses Ziehregal zwischen zwei vorgegebenen Positionen befördert, nämlich einer Bestückungsposition außerhalb des Rahmens 10 und einer Entnahmeposition in der Mitte des Ganges 15.

Im folgenden wird ein Funktionsablauf des Regallagers beschrieben. Wenn der (nicht dargestellte) Rechner den Befehl erhält, eine bestimmte Hülse 18, die ein bestimmtes Produkt enthält, aus dem Regallager zu holen, wird die Transportvorrichtung 20 angetrieben, um den Manipulatorarm 34 im Gang 15 zu verschieben. Gleichzeitig mit dieser horizontalen Verschiebung der Transportvorrichtung wird der Vertikalschlitten 31 an dem Mast 28 in die erforderliche Höhe gefahren. Während auf diese Weise der Manipulatorarm 34 in X-Richtung und in Y-Richtung bewegt wird, erfolgt das Verfahren des Ziehregals 11 (oder 11a), aus dem die Hülse 18 entnommen werden soll, in Z-Richtung, wobei die betreffende Hülse 18 auf die vertikale Zielebene 37 eingestellt wird. Wenn der Manipulatorarm 34 die Hülse 18 erreicht, ist diese bereits in der richtigen Position, so daß der Kopf 35 die Hülse 18 ergreifen kann. Dann wird die Transportvorrichtung 20 in X-Richtung angetrieben, wodurch die Hülse 18 aus dem Regalfach 17 herausgezogen wird. Der Manipulatorarm 34 wird gemäß Fig. 3 in die senkrechte Stellung 34b oder eine Schrägstellung geschwenkt. In dieser Stellung erfolgt der Transport der Hülse 18, während gleichzeitig der Vertikalschlitten 31 am Mast 28 abgesenkt werden kann. Die Riementriebe 50 werden in Rückwärtsrichtung angetrieben, um das betreffende Ziehregal wieder in seine Grundstellung innerhalb der Reihe von Ziehregalen zurückzubringen.

Wenn die Transportvorrichtung 20 die Aufnahmevorrichtung 40 erreicht hat, wird der Manipulatorarm 34 in die Stellung 34d gemäß Fig. 4 verschwenkt, wodurch das Produkt 39 aus der Hülse 18 herausfällt. Anschließend wird in Stellung 34e die Hülse 18 abgestoßen, so daß sie zur Neubefüllung mit einem Produkt zur Verfügung steht.

Die Riementriebe 50 befinden sich unterhalb derjenigen Ebene, auf der die Ziehregale laufen. Die Laufrollen 13 sind in (nicht dargestellten) Führungsschienen geführt. Der Gang 15 hat eine Breite, die der Breite eines Ziehregals entspricht. Ein Ziehregal wird entweder aus der rechten Reihe oder aus der linken Reihe in diesen Gang hineinbewegt.

Der Boden des Ganges 15 ist mit Platten belegt, die Schlitze für die Riementriebe 50 und die Führungen der Ziehregal-Rollen 13 freilassen. Diese Platten ermöglichen es, den Gang durch Personen zu begehen, so daß das Ziehregal bei Ausfall der Steuerung auch manuell bedient werden kann.

## Patentansprüche

1. Regallager mit mindestens an einer Seite eines Ganges (15) angeordneten Ziehregalen (11,11a), die einzeln quer zum Gang in diesen hinein bewegt werden können, wobei jedes Ziehregal an vorbestimmten Positionen Fächer (17) enthält, die parallel zum Gang (15) ausgerichtet sind, und einer Transportvorrichtung (20), die einen längs des Ganges verfahrbaren Mast (28) und einen am Mast in der Höhe verfahrbaren Vertikalschlitten (31) mit einem in Längsrichtung zum Gang ausrichtbaren Manipulatorarm (34) aufweist, wobei jedem Ziehregal ein eigenständig steuerbarer Antrieb zugeordnet ist, der das Bewegen des Ziehregals während des Fahrens der Transportvorrichtung (20) erlaubt,
dadurch gekennzeichnet, daß die Ziehregale (11,11a) von ihrem Antrieb in Abhängigkeit von dem jeweiligen Regalfach (17), auf das der Manipulatorarm (34) zugreifen soll, unterschiedlich weit in den Gang (15) herausbewegt werden, derart, daß das betreffende Regalfach (17) in einer vertikalen Zielebene (37) positioniert wird, in der sich der Manipulatorarm (34) befindet.

2. Regallager nach Anspruch 1, dadurch gekennzeichnet, daß für mehrere Ziehregale (11,11a) ein gemeinsames Antriebselement (50) vorgesehen ist und daß die Ziehregale Kupplungsmittel (57) zum gesteuerten Ankuppeln an das Antriebselement (50) aufweisen.

3. Regallager nach Anspruch 2, dadurch gekennzeichnet, daß die Kupplungsmittel (57) durch ein Betätigungsorgan gesteuerte Mitnahmestifte (58) aufweisen, die in Mitnahmelöcher (56) des zugehörigen Antriebselement eingreifen können.

4. Regallager nach einem der Ansprüche 1-3, dadurch gekennzeichnet, daß der Manipulatorarm (34) um eine quer zum Gang (15) verlaufende horizontale Achse (36) um mindestens 180° schwenkbar ist, derart, daß er im Gang (15) entweder in die eine Richtung, die Zugriffsrichtung, zeigt oder in die entgegengesetzte Richtung, die Abgaberichtung.

5. Regallager nach Anspruch 4, dadurch gekennzeichnet, daß der Manipulatorarm an einem Horizontalschlitten (32) angebracht ist, der an dem Vertikalschlitten (31) horizontal verfahrbar ist, wobei der Horizontalschlitten (32) auf der in Abgaberichtung liegenden Seite des Mastes (28) angeordnet und mit in Abgaberichtung weisendem Manipulatorarm (34) quer zum Gang verfahrbar ist, und daß der Manipulatorarm (34) am hast (28) vorbei in die Zugriffsrichtung schwenkbar ist.

6. Regallager nach einem der Ansprüche 1-5, dadurch gekennzeichnet, daß ein Warenübernahme-Ziehregal (41) vorgesehen ist, das zur Bestückung über die Reihe der zur Lagerung dienenden Ziehregale (11,11a) hinaus vom Gang (15) wegbewegbar und zur Warenübergabe an die Ziehregale (11,11a) in den Gang (15) bewegbar ist.

7. Regallager nach Anspruch 6, dadurch gekennzeichnet, daß das Warenübernahme-Ziehregal (41) an dem in Abgaberichtung liegenden Ende des Ganges angeordnet ist und daß seine Regalfächer (17) zu derjenigen Seite offen sind, auf der sich die zur Lagerung dienenden Ziehregale (11,11a) befinden.

8. Regallager nach einem der Ansprüche 1-7, dadurch gekennzeichnet, daß die Transportvorrichtung (20) einen längs des Ganges (15) verfahrbaren Transportschlitten (21) aufweist, an dem der nur an seinem einen vertikalen Ende gehaltene Mast (28) befestigt ist und daß die Antriebe für die Ziehregale (11,11a) an demjenigen vertikalen Ende der Ziehregale angeordnet sind, das dem Transportschlitten (21) abgewandt ist.

## Claims

1. A shelf storage comprising drawing racks (11, 11a) arranged on at least one side of a passage (15) and being able to be moved individually transversely to and into the passage, each drawing rack comprising, at predetermined positions thereof, compartments (17) aligned parallel to said passage (15), and a transport device (20) comprising a mast (28) travelling along the passage and a vertically movable carriage (31) being displaceable vertically on the mast and comprising a manipulator arm (34) being alignable in a direction longitudinal to the passage, each drawing rack being associated with an individually controllable drive allowing to move the drawing rack during travelling of said transport device (20),
characterized in that the distance by which said drawing racks (11, 11a) are moved out into said passage (15) by the drive thereof differs depending on the corresponding rack compartment (17) such that the respective rack compartment (17) is positioned in a vertical target plane (37) where said manipulator arm (34) is located.

2. The shelf storage according to claim 1, characterized in that a shared driving element (50) is provided for a plurality of drawing racks (11, 11a) and in that the drawing racks comprise coupling means (57) for controllably coupling them to said drawing element (50).

3. The shelf storage according to claim 2, characterized in that said coupling means (57) comprises connecting pins (58) controlled by an actuating organ and being able to engage connecting holes (56) of the associated driving element.

4. The shelf storage according to any one of claims 1-3, characterized in that said manipulator arm (34) is pivotable by at least 180° about a horizontal axis transverse to said passage (15) such that it points in the passage either into one direction, the access direction, or into the opposite direction, the delivery direction.

5. The shelf storage according to claim 4, characterized in that said manipulator arm (34) is attached to a horizontally movable carriage (32) being horizontally displaceable on said vertically movable carriage (31), said horizontally movable carriage (32) being arranged on that side of said mast (28) that is located in the delivery direction and being displaceable transversely to the passage with said manipulator arm (34) pointing into the delivery direction, and in that said manipulator arm (34) is pivotable past said mast (28) into the access direction.

6. The shelf storage according to any one of claims 1-5, characterized in that an item transfer drawing rack (41) is provided being movable away from said passage (15) beyond the row of drawing racks (11, 11a) serving as storage racks and being movable into said passage (15) for transferring goods to said drawing racks (11, 11a).

7. The shelf storage according to claim 6, characterized in that said item transfer drawing rack (41) is arranged at that end of the passage that is located in the delivery direction and in that the rack compartments (17) thereof are open towards that side where said drawing racks (11, 11a) serving as storage racks are located.

8. The shelf storage according to any one of claims 1-7, characterized in that said transport device (20) comprises a transport carriage (21) displaceable along said passage (15), with said mast (28) being supported only at one vertical end thereof by the transport carriage, and in that the drives for said drawing racks (11, 11a) are arranged at that vertical end of the drawing racks which is opposite said transport carriage (21).

## Revendications

1. Magasin à rayonnages comprenant plusieurs rayonnages mobiles (11, 11a), disposés sur au moins un côté d'un couloir (15), rayonnages qui peuvent être déplacés séparément dans le sens transversal du couloir, chaque rayonnage mobile contenant, à des positions prédéterminées, des casiers (17) qui sont orientés parallèlement au couloir (15), et un dispositif de transport (20), qui est muni d'une barre verticale (28), qui peut être déplacée dans le sens longitudinal du couloir, et d'un chariot vertical (31), qui peut se déplacer en hauteur contre ladite barre verticale et qui comprend un bras de manoeuvre (34) orientable dans le sens longitudinal par rapport au couloir, un système d'entraînement, actionné par une commande, étant attribué à chaque rayonnage mobile, le système d'entraînement autorisant le mouvement du rayonnage mobile pendant le déplacement du dispositif de transport (20), caractérisé en ce que les rayonnages mobiles (11, 11a) sont déplacés par leur système d'entraînement sur une distance variable dans le couloir, définie en fonction de chaque casier (17) auquel le bras de manoeuvre (34) doit accéder, de sorte que le casier (17) concerné soit positionné dans un plan cible vertical (37), dans lequel se situe le bras de manoeuvre (34).

2. Magasin à rayonnages selon la revendication 1, caractérisé en ce qu'il est prévu de monter un élément de commande (50) commun pour plusieurs rayonnages mobiles (11, 11a) et en ce que les rayonnages mobiles sont munis d'organes de couplage (57), destinés à les coupler à l'élément de commande (50) par l'intermédiaire d'une commande.

3. Magasin à rayonnages selon la revendication 2, caractérisé en ce que les organes de couplage (57) sont munis de tenons d'entraînement (58) actionnés par un organe de commande, les tenons d'entraînement pouvant s'engager dans les trous d'entraînement (56) de l'élément de commande correspondant.

4. Magasin à rayonnages selon l'une des revendications 1 à 3, caractérisé en ce que le bras de manoeuvre (34) peut pivoter sur au moins 180° autour d'un axe horizontal (36) qui s'étend dans le sens transversal du couloir (15), de sorte que ledit bras de manoeuvre soit orienté dans le couloir (15) soit dans une direction, la direction de prélèvement, soit dans la direction opposée, la direction de déchargement.

5. Magasin à rayonnages selon la revendication 4, caractérisé en ce que le bras de manoeuvre est monté sur un chariot horizontal (32), qui peut se déplacer horizontalement sur le chariot vertical (31), le chariot horizontal (32) étant disposé sur le côté de la barre verticale (28) tourné vers la direction de déchargement et pouvant se déplacer avec le bras de manoeuvre (34), tourné dans la direction de déchargement, dans le sens transversal du couloir, et en ce que le bras de manoeuvre (34) peut pivoter dans la direction d'accès en passant devant la barre verticale (28).

6. Magasin à rayonnages selon l'une des revendications 1 à 5, caractérisé en ce qu'il est prévu un rayonnage mobile pour la réception des marchandises (41), qui peut être déplacé pour le chargement au-delà de la rangée des rayonnages mobiles (11, 11a) utilisés pour le stockage et qui peut être déplacé dans le couloir (15) pour le transfert des marchandises dans les rayonnages mobiles (11, 11a).

7. Magasin à rayonnages selon la revendication 6, caractérisé en ce que le rayonnage mobile pour la réception des marchandises (41) est disposé à l'extrémité du couloir tournée dans la direction du déchargement et en ce que ses casiers (17) sont ouverts sur le côté tourné vers les rayonnages mobiles (11, 11a) utilisés pour le stockage.

8. Magasin à rayonnages selon l'une des revendications 1 à 7, caractérisé en ce que le dispositif de transport (20) est muni d'un chariot de transport (21) qui peut se déplacer dans le sens longitudinal du couloir (15) et sur lequel est fixée la barre verticale (28) maintenue seulement à une extrémité verticale, et en ce que les systèmes d'entraînement des rayonnages mobiles (11, 11a) sont montés sur l'extrémité verticale des rayonnages mobiles opposée au chariot de transport (21).
